(19) Europäisches Patentamt
European Patent Office
Office européen des brevets

(11) EP 3 799 008 A1

(12) EUROPEAN PATENT APPLICATION

(43) Date of publication:
31.03.2021 Bulletin 2021/13

(51) Int Cl.:
G08G 5/00 (2006.01)

(21) Application number: 19199793.1

(22) Date of filing: 26.09.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Volocopter GmbH
76646 Bruchsal (DE)

(72) Inventor: Ciarambino, Marco
76297 Stutensee (DE)

(74) Representative: Lemcke, Brommer & Partner
Patentanwälte Partnerschaft mbB
Siegfried-Kühn-Straße 4
76135 Karlsruhe (DE)

(54) METHOD OF GENERATING DATASETS FOR USE IN THE TRAINING AND VALIDATION OF OBJECT DETECTION SYSTEMS

(57) We propose a method of generating datasets (DS) for use in the training and validation of object detection systems, comprising:

providing a first device (2) and a second device (3), both capable of determining their respective position and velocity in a first reference frame, said first device (2) being equipped with sensor means (2b) for detecting a physical presence and geometric appearance of the second device (3) and for generating corresponding sensor data (SD) in a sensor reference frame;

placing said first device (2) at a first location in space and said second device (3) at a second location in space;

establishing a data link (DL) between the first device (2) and the second device (3), preferably in wireless fashion;

repeatedly communicating position data (PD) and optionally velocity data (VL) from the second device (3) to the first device (2) over said data link (DL);

detecting, preferably repeatedly, the physical presence and geometric appearance of the second device (3) with said sensor means (2b) and generating corresponding sensor data (SD) in the sensor reference frame;

using the sensor data (SD), the position data (PD) and optionally the velocity data (VL) to automatically determine a representation of the second device (3) in the sensor reference frame in the form of a dataset (DS), which dataset (DS) comprises at least the sensor data (SD) and associated position data (APD) of the second device (3) in the sensor reference frame.

Fig. 1

**Description**

The invention relates to a method of generating datasets for use in the training and validation of object detection systems, in particular for aircraft and other flying objects, according to claim 1.

The invention also relates to a method of training and validating object detection systems, comprising using the inventive method to generate at least one dataset, according to claim 10.

The invention further relates to a system for generating datasets for use in the training and validation of object detection systems, according to claim 11.

Object detection systems can be used, inter alia, for controlling aircraft and other flying objects, e.g., Unmanned Aerial Vehicles (UAV), such as drones or the like. However, their use is not limited to such scenarios. Creating datasets for object detection systems, in particular for vision-based, i.e., optical object detection systems, which comprise optics and cameras, based on machine learning, is usually an expensive and time-consuming process. It involves data gathering (in this case pictures of flying aerial vehicles, e.g., drones) and so-called data labelling, i.e., an indication of the location and eventually the class of an object to be detected, e.g., by defining a bounding box around a detected drone in a picture obtained by means of an optical sensor (camera) comprised in the object detection system. This enables the system to provide an output as to what kind of object has been detected at a particular location. Since said labelling is a task that requires a large amount of human effort, the generation of big datasets is prohibitive for most individuals and companies in terms of workforce and monetary availability. Moreover, humans are prone to errors in repetitive tasks, which decreases the potential of effectiveness of the dataset.

There is a need for devising a method and a system of the above-defined type that can be used to create large datasets of labelled data for use in object detection systems which can be more effectively used while being less costly and faster to generate. It is the object of the present invention to propose such a method and system.

The object is achieved by means of a method of generating datasets for use in the training and validation of object detection systems according to claim 1, by means of a method of training and validating object detection systems having the features of claim 10, and by a system for generating datasets for use in the training and validation of object detection systems having the features of claim 11.

Further advantageous embodiments are defined in the subclaims.

According to a first aspect of the invention, a method of generating datasets for use in the training and validation of object detection systems comprises: providing a first device and a second device, both capable of determining their respective position and velocity in a first reference frame, said first device being equipped with sensor means for detecting a physical presence and geometric appearance of the second device and for generating corresponding sensor data in a sensor reference frame;

placing said first device at a first location in space and said second device at a second location in space;

establishing a data link between the first device and the second device, preferably in wireless fashion;

repeatedly communicating position data and optionally velocity data from the second device to the first device over said data link;

detecting, preferably repeatedly, the physical presence and geometric appearance of the second device with said sensor means and generating corresponding sensor data in the sensor reference frame;

using the sensor data, the position data and optionally the velocity data to automatically determine a representation of the second device in the sensor reference frame in the form of a dataset, which dataset comprises at least the sensor data and associated position data of the second device in the sensor reference frame.

This defines an automatic pipeline for the labelling of (aerial) obstacles or generally of objects in (3D) space. In this way, the invention dramatically reduces costs and the required amount of human workforce while increasing accuracy - and thus the effectiveness - of object detection systems that can be trained with the datasets created by using the invention. In the present description, "object detection systems" are also referred to as "intruder detection systems".

The term "sensor data and associated position data of the second device in the sensor reference frame" denotes the data as obtained by the sensor means of the first device, which can be an aircraft with a radar or a camera, when detecting the second device, which can also be an aircraft. Said data are given in the sensor reference frame, but they are based on known coordinates of the second object in said first reference frame, i.e., a "real-world" earth-based inertial reference frame. Said coordinates are known because they are constantly measured and transmitted to the first device. In this way, the first device "knows" exactly to which real-world position corresponds a position measured by the sensor means in the sensor reference frame. The data can thus be labelled with the exact real-world locations and/or relative locations with respect to the first and second devices.

In order to further enhance the effectiveness of the dataset, in an embodiment of the method according to the present invention, the latter may further comprise communicating - at least once during a given communication between the first device and the second device - geometric information descriptive of the second device to the first device over said data link. Said geometric information may comprise information concerning a shape and/or size of the second object (also referred to as "target"; the first device can be referred to as "spotter"). Typically, however, the geometric characteristics of the target are known a priori, therefore it is not needed to communicate them.

Knowing also the size (and the shape) of the target (second device), it is possible to estimate the size of a bounding box - or of an equivalent localization representation of the target in the sensor space (sensor reference system) - which is required in order to include the silhouette of the target in the sensor reference frame, e.g., a camera image. This involves linear algebra transformations that can be computed either on-board the spotter aircraft (first device) or off-board the spotter aircraft on a computing device. In the latter case, a wireless connection between the computing device and the spotter aircraft can be required.

Thus, in an embodiment of the method according to the present invention, determining said representation is performed by or on-board the first device.

Alternatively, an embodiment of the method according to the present invention comprises provision of a further computing device, and further comprises sending the data or information used for determining said representation to said computing device, preferably over a further wireless data link, wherein determining said representation is performed off-board by the further computing device.

In order to be used for the training of intruder detection systems, an embodiment of the method according to the present invention comprises storing the generated dataset, preferably at the first device and/or at the computing device, for later use.

In an embodiment of the method according to the present invention the sensor data are acquired by using a camera, LIDAR, RADAR or other suitable means as the sensor means. Furthermore, a plurality of such sensor means can be combined in order to obtain an increased detection capability.

Preferably, in an embodiment of the method according to the present invention the first device and the second device are flying objects, e.g. aircraft or Unmanned Aerial Vehicles, UAV (drones). They can be electrically propelled and have VTOL (vertical take-off and landing) capabilities. An example is the Volocopter® aircraft manufactured by the present applicant.

In another embodiment of the method according to the present invention, at least some of the data or information used for determining said representation is derived from a cooperative detect and avoid system installed on-board said flying objects, e.g., ADS-B or similar. Said cooperative detect and avoid system can provide at least said geometric information (size, class, type, ...) descriptive of the second device.

In a further embodiment of the method according to the present invention, the first device and the second device can be part of a registered airspace, e.g., involving UTM/ATM services, which provides registered airspace information on position, estimated trajectory, type, size, etc. for each device forming part of the registered airspace, and the method can comprise using said registered airspace information during determining said representation.

According to a second aspect the invention, there is proposed a method of training and validating object detection systems, said method comprising:

> using the method according to said first aspect of the invention to generate at least one dataset;
> providing said dataset to an object detection system;
> operating the object detection system by using said dataset.

Since the effectiveness of the dataset is increased, this also increase an effectiveness of an object detection system which has been trained by using said dataset.

According to a third aspect of the invention, a system for generating datasets for use in the training and validation of object detection systems, comprises:

> a first device and a second device, both adapted to determine their respective position and velocity in a first reference frame, said first device being equipped with sensor means for detecting a physical presence and geometric appearance of the second device and for generating corresponding sensor data in a sensor reference frame;
> data communication means for establishing a data link, preferably in wireless fashion, between the first device and the second device, said data communication means being adapted for repeatedly communicating position data and optionally velocity data from the second device to the first device over said data link;
> computing means for computing, using the sensor data, the position data and optionally the velocity data, a representation of the second device in the sensor reference frame in the form of a dataset, which dataset comprises at least the sensor data and associated position data of the second device in the sensor reference frame.

Such as system is particularly well suited for performing the method according to said first aspect of the invention.

In a further embodiment of the system according to the present invention, the computing means are located at or on-board the first device. Alternatively, the computing means can be located in or at a further computing device, i.e., off-board, wherein the system is then preferably adapted for sending the data or further information used for determining said representation to said further computing device, preferably over a further wireless data link.

In yet a further embodiment of the system according to the present invention, the latter further comprises storage means for storing the generated dataset, preferably at the first device and/or at the computing device, for later use - especially according to said second aspect of the invention.

In a further embodiment of the system according to the present invention, the sensor means can comprise a camera, LIDAR, RADAR or other suitable means, alone or in combination, as already stated above.

In yet another embodiment of the system according to the present invention, the first device and the second device are flying objects, e.g., aircraft or Unmanned Aerial Vehicles, UAV,

wherein preferably the first device and the second device are part of a registered airspace, which provides registered airspace information on position, estimated trajectory, type, size, etc. for each device forming part of the registered airspace, which can comprise using said registered airspace information during determining said representation,

more preferably the first device and the second device comprise a cooperative detect and avoid system, at least some of the data or information used for determining said representation being derived from said cooperative detect and avoid system, e.g., ADS-B. Preferably, said cooperative detect and avoid system provides at least said geometric information descriptive of the second device.

In particular exemplary embodiments, the method and system according to the invention may be devised as follows:

The method is devoted to the automatic generation of datasets to train and validate vision-based and radio-frequency-based object detection systems for aerial intruders. In particular, it aims to increase the accuracy of the dataset while lowering the costs and removing error-prone human work from the labelling of the images (generally: sensor data).

The system involves at least two actors (first device or spotter and second device or target), whose positions in space are well known during system operation, for instance by using augmented GNSS (Global Navigation Satellites System) systems, like RTK (Real-Time Kinematics) and IMU (Inertial Measurement Unit).

Moreover, the geometric characteristics of the two - or at least of the target device - are known, in particular their dimensions (size).

The two actors can be connected to each other by means of a preferably wireless data connection (data link), e.g. a radio link, in order to be able to exchange their position and velocity data during the operations. However, there need not be a direct or dedicated connection between the two actors. In an alternative embodiment, the two actors can be connected to an airspace system (e.g., UTM/ATM) and receive mutual position data from there.

One device, the so-called "spotter" or "spotter aircraft", has a sensor or sensor means, e.g., a camera, LIDAR, RADAR, etc. on board, and may also comprise a recording device (storage means), e.g., a small computer with a hard drive. A position and orientation of the sensor with respect to the spotter aircraft and any intrinsic parameters of the sensor are known (i.e., the sensor is fully calibrated).

The second device, the so-called "target" or "target aircraft", represents the object that the intruder detection system wants to detect and classify (e.g., a commercial drone or another aircraft).

Since the target position is precisely known at every moment due to, e.g., the on-board sensors of the target and is then repeatedly communicated over the (wireless) connection to the spotter, and since the sensor is calibrated with respect to the spotter reference system, the target position can be projected into the sensor reference system, e.g. a 2D camera image frame, by means of rigid algebraic transformations. If one knows also the size of the target, which is a highly preferred embodiment of the method according to the invention, it is possible to estimate the size of a bounding box - or of an equivalent localization representation of the target in the sensor space - which is required for to include the silhouette of the target in the sensor reference frame, e.g., the camera image. This involves linear algebra transformations that can be computed either on-board or off-board the spotter aircraft on a further computing device. In the latter case, a preferably wireless connection between the computing device and the spotter drone is required. For instance, the calculation could be executed in the following fashion:

- Retrieve position of spotter (subscript "s") and target (subscript "t") from augmented GNSS receivers in terms of latitude, longitude and altitude in WGS-84 reference frame

$$P_{g,s} = \begin{bmatrix} \lambda_s \\ \phi_s \\ h_s \end{bmatrix}, \quad P_{g,t} = \begin{bmatrix} \lambda_t \\ \phi_t \\ h_t \end{bmatrix}$$

- Convert the two GNSS positions (latitude, longitude, altitude) in cartesian global frame ECEF (Earth Centered, Earth Fixed)

$$P_{ECEF,s} = \begin{bmatrix} (N_s + h_s)\cos(\lambda_s)\cos(\phi_s) \\ (N_s + h_s)\cos(\lambda_s)\sin(\phi_s) \\ ((1 - e^2) + h_s)\sin(\lambda_s) \end{bmatrix},$$

where

$$N = \frac{r}{\sqrt{1 - e^2\sin(\lambda)^2}}$$

and *r* represents the Earth radius, *e* the eccentricity.

The same equations are used to convert the target position to ECEF.

- Convert ECEF to NED

$$P_{NED,s} = (R_{ECEF}^{NED})^T(P_{ECEF,s} - P_{NED,0})$$

where

$$R_{ECEF}^{NED} = \begin{bmatrix} -\sin(\phi)\cos(\lambda) & -\sin(\lambda) & -\cos(\phi)\cos(\lambda) \\ -\sin(\phi)\sin(\lambda) & \cos(\lambda) & -\cos(\phi)\sin(\lambda) \\ \cos(\phi) & 0 & -\sin(\phi) \end{bmatrix}$$

where $\lambda$ and $\varphi$ represent the latitude and longitude, respectively, of the point where tangent plane of the NED system has its origin ($P_{NED,0}$ in the equation). Indeed, the same equation applies for the target.
- Calculate relative position between spotter and target in NED reference frame

$$P_{rel} = P_{NED,t} - P_{NED,s}$$

- Compute the azimuth (*az*) and elevation (*el*) angles of the target with respect to the spotter

$$el = \tan^{-1}\left(\frac{P_{rel,down}}{P_{rel,north}}\right) \quad az = \tan^{-1}\left(\frac{P_{rel,north}}{P_{rel,east}}\right)$$

- Since the camera position is known by design (e.g. the camera is calibrated), check if the angles are included in camera field of view.
- If in field of view, record the sensor data and the position of the target in sensor reference frame.

Therefore, together with the sensor output itself, said bounding box representing the target detection (or an equivalent localization representation of the target in the sensor space) is saved and preferably stored on-board the spotter. Thus, no manual labelling is required.

The resulting dataset is therefore composed by the "labelled" sensor data, which comprise the output of the sensor, as it would be input in an object detection system, together with the exact localization and/or the exact relative position of the object projected into the sensor reference space.

The method according to the invention can be integrated in the Volocopter® vehicle or any other aircraft, UAV, during nominal operations.

Indeed, any sensor data recorded during real operations can be used for the generation of datasets that can in turn be used to train, validate and test object detection systems of future autonomous (aerial) vehicles.

It is further possible within the scope of the present invention to exploit information from any cooperative detect and avoid system that provides an intruder's position - e.g., the ADS-B system -, therefore possibly extending the scope of the dataset to every category of aircraft that have such systems on-board. It is important to note that cooperative detection systems usually include also the type of aircraft in their broadcast data, thus providing complete information for dataset generation. Considering the most common case of air-taxi routes involving operations in close vicinity to airports gives a hint as to the amount of valuable data that could be collected in such scenarios.

Aircraft such as the Volocopter® may be part of a registered airspace (UTM/ATM services) in the future, which means that operators will know about all the other registered participants (and their specific data like type, size, etc.) as well as their respective positions (and estimated trajectories). This information can be used for dataset generation, as already stated before.

Additional features and advantages of the invention will now be explained with reference to the appended drawings.

Fig. 1    provides a general view of a system according to the invention;

Fig. 2    is a flowchart of a method according to the invention; and

Fig. 3    schematically shows sensor data obtained by the spotter's sensor means.

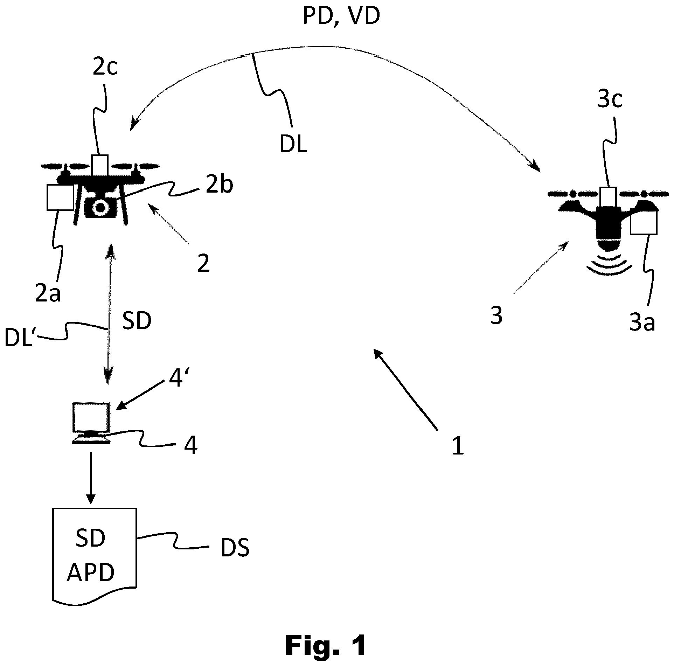

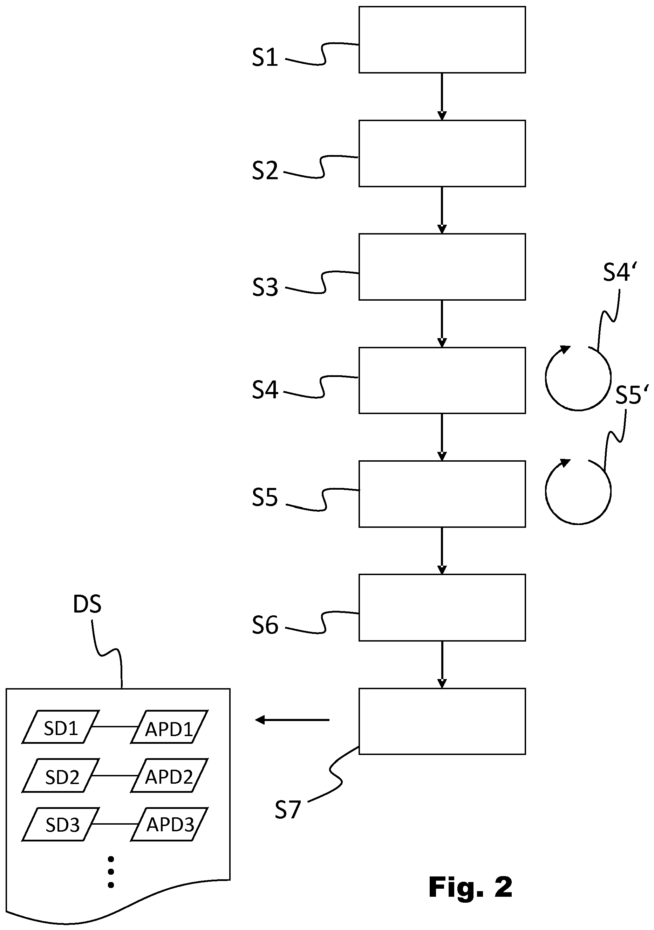

Figure 1 shows a system 1 for generating datasets for use in the training and validation of object detection systems (not shown). The system 1 comprises a first device 2 (the spotter) and a second device 3 (the target), both in the form of UAV or drones. The devices 2, 3 are adapted to determine their respective position and velocity in a first reference frame and carry suitable technical equipment 2a, 3a, which is known to a person skilled in the art. The first device 2 is equipped with sensor means 2b (i.e., an optical camera) for detecting a physical presence and geometric appearance of the second device 3 and for generating corresponding sensor data SD in a reference frame of the sensor means 2b. Both devices 2, 3 also have data communication means 2c, 3c for establishing a wireless data link DL between the first device 2 and the second device 3. Said data communication means 2c, 3c are adapted for repeatedly communicating position data PD and velocity data VD at least from the second device 3 to the first device 2 over said data link DL. The system 1 further comprises computing means 4 for computing, using the sensor data SD, the position data PD and the velocity data VD, a representation of the second device 3 in the sensor reference frame in the form of a dataset DS (cf. Fig. 2), which dataset DS comprises at least the sensor data SD itself and associated position data APD of the second device 3 in the sensor reference frame. In this way, it is known from the dataset where the second device 3 "really" is relative to the first device 2 when the sensor means 2b output given sensor data.

In the embodiment shown, the computing means 4 are devised in the form of a ground based computing device 4' which is linked to the first device 1 via a further wireless data link DL'. Over said further wireless data link DL', the first device 2 communicates all data or information (shape and/or size, for instance) received from the second device 3 together with its own sensor data SD to the computing means 4 for automatic generation of the dataset DS. Alternatively (not shown), the computing means 4 could be located on-board the first device 2. In yet another alternative embodiment (not shown), the second device 3 may transmit some or all of its data directly to the off-board computing means 4.

Figure 2 shows a flowchart of an embodiment of the method according to the invention. At S1, there are provided a first device and a second device, both capable of determining their respective positions and velocities in a first reference frame, e.g., an earth-based inertial reference frame. As explained above, said first device is equipped with sensor means for detecting a physical presence and a geometric appearance of the second device and for generating corresponding sensor data in a sensor reference frame. At S2, said first device is placed at a first location in space, and said second device is placed at a second location in space. These locations (i.e., positions and velocities) are determined by means of suitable navigation equipment on-board each of the devices. At S3, the devices establish a data link between them, preferably in wireless fashion. Over said data link, there is repeated communication of position data and (optionally) velocity data at least from the second device (target) to the first device (spotter) over said data link at S4. Circular arrow S4' denotes that this step takes place repeatedly during system operation. At S5, there is a detection, preferably repeatedly (S5'), of the physical presence and geometric appearance of the second device (target) by the first device (spotter) with said sensor means, which leads to the generation of corresponding sensor data in the sensor reference frame. Then, at S6, the sensor data, the position data and the velocity data are used to automatically determine a representation of the second device in the sensor reference frame in the form of a dataset DS, which dataset DS comprises at least the sensor data and associated position data of the second device in the sensor reference frame. Said dataset DS is output (stored) at S7 for later use in intruder detection system training and validation.

As shown in Figure 2, the dataset DS may comprise a plurality of (e.g. time-resolved) labelled sets of sensor data SD1, SD2, ... together with respective associated target(s') position data APD1, APD2, ... as explained before.

Each couple of sensor data and associated position data comprises information as to where a given target is located (relative to the spotter, i.e., the sensor means) for a particular appearance of the sensor data.

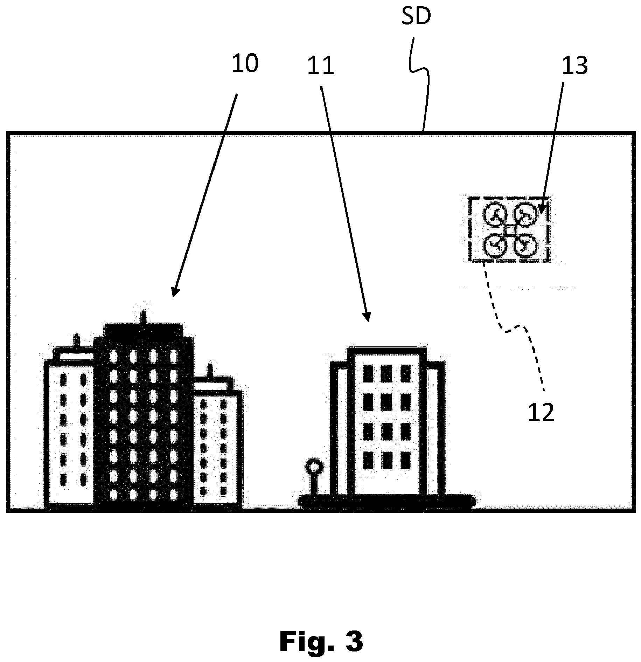

Figure 3 schematically shows sensor data (image data) SD obtained by the sensor means, e.g., an optical camera on-board the spotter aircraft, cf. Figure 1. Reference numerals 10, 11 denote fixed obstacles (buildings), as seen by the sensor means, whereas 12 denotes a bounding box which is a simple way of representing a target in the sensor space. Said bounding box 12 is required for to include the silhouette of the target, e.g., a drone 13, as shown, in the sensor reference frame, e.g., the camera image. This has been explained in detail above.

## Claims

1.  A method of generating datasets (DS) for use in the training and validation of object detection systems, comprising:

    providing a first device (2) and a second device (3), both capable of determining their respective position and velocity in a first reference frame, said first device (2) being equipped with sensor means (2b) for detecting a physical presence and geometric appearance of the second device (3) and for generating corresponding sensor data (SD) in a sensor reference frame;
    placing said first device (2) at a first location in space and said second device (3) at a second location in space;
    establishing a data link (DL) between the first device (2) and the second device (3), preferably in wireless fashion;
    repeatedly communicating position data (PD) and optionally velocity data (VL) from the second device (3) to the first device (2) over said data link (DL);
    detecting, preferably repeatedly, the physical presence and geometric appearance of the second device (3) with said sensor means (2b) and generating corresponding sensor data (SD) in the sensor reference frame;
    using the sensor data (SD), the position data (PD) and optionally the velocity data (VL) to automatically determine a representation of the second device (3) in the sensor reference frame in the form of a dataset (DS), which dataset (DS) comprises at least the sensor data (SD) and associated position data (APD) of the second device (3) in the sensor reference frame.

2.  The method of claim 1, further comprising communicating at least once geometric information descriptive of the second device (3) to the first device (2) over said data link (DL).

3.  The method of claim 1 or 2, wherein determining said representation is performed by or on-board the first device (2).

4.  The method of claim 1 or 2, comprising provision of a further computing device (4), and further comprising sending the data or information used for determining said representation to said computing device (4), preferably over a further wireless data link (DL'), wherein determining said representation is performed by the computing device (4).

5.  The method of any one of claims 1 through 4, comprising storing the generated dataset (DS), preferably at the first device (2) and/or at the computing device (4).

6.  The method of any one of claims 1 through 5, wherein the sensor data (SD) are acquired by using a camera, LIDAR, RADAR or other suitable means as the sensor means (2b).

7.  The method of any one of claims 1 through 6, wherein the first device (2) and the second device (3) are flying objects, e.g. aircraft or Unmanned Aerial Vehicles, UAV.

8.  The method of claim 7, wherein at least some of the data or information used for determining said representation is derived from a cooperative detect and avoid system installed on-board said flying objects (2, 3), said cooperative detect and avoid system providing at least said geometric information descriptive of the second device (3).

9.  The method of claim 7 or 8, wherein the first device (2) and the second device (3) are part of a registered airspace, which provides registered airspace information on position, estimated trajectory, type, size, etc. for each device (2, 3) forming part of the registered airspace, comprising using said registered airspace information during determining said representation.

10. A method of training and validating object detection systems, comprising:

    using the method of any one of the preceding claims to generate at least one dataset (DS);

providing said dataset (DS) to an object detection system;
operating the object detection system by using said dataset (DS).

**11.** A system (1) for generating datasets for use in the training and validation of object detection systems, comprising:

a first device (2) and a second device (3), both adapted to determine their respective position and velocity in a first reference frame, said first device (2) being equipped with sensor means (2b) for detecting a physical presence and geometric appearance of the second device (3) and for generating corresponding sensor data (SD) in a sensor reference frame;
data communication means (2c, 3c) for establishing a data link (DL), preferably in wireless fashion, between the first device (2) and the second device (3), said data communication means (2c, 3c) being adapted for repeatedly communicating position data (PD) and optionally velocity data (VD) from the second device (3) to the first device (2) over said data link (DL);
computing means (4) for computing, using the sensor data (SD), the position data (PD) and optionally the velocity data (VD), a representation of the second device (3) in the sensor reference frame in the form of a dataset (DS), which dataset (DS) comprises at least the sensor data (SD; SD1, SD2,...) and associated position data (APD; APD1, APD2,...) of the second device (3) in the sensor reference frame.

**12.** The system (1) of claim 11, wherein the computing means (4) are located at or on-board the first device (2), or wherein the computing means (4) are located in or at a further computing device (4'), wherein the system (1) is adapted for sending the data (PD, VD) or further information used for determining said representation to said computing device (4'), preferably over a further wireless data link (DL').

**13.** The system (1) of claim 11 or 12, further comprising storage means for storing the generated dataset (DS), preferably at the first device (2) and/or at the computing device (4').

**14.** The system (1) of any one of claims 11 through 13, wherein the sensor means (2b) comprise a camera, LIDAR, RADAR or other suitable means.

**15.** The system (1) of any one of claims 11 through 14, wherein the first device (2) and the second device (3) are flying objects, e.g. aircraft or Unmanned Aerial Vehicles, UAV,
wherein preferably the first device (2) and the second device (3) are part of a registered airspace, which provides registered airspace information on position, estimated trajectory, type, size, etc. for each device (2, 3) forming part of the registered airspace, comprising using said registered airspace information during determining said representation,
more preferably wherein the first device (2) and the second device (3) comprise a cooperative detect and avoid system, at least some of the data or information used for determining said representation being derived from said cooperative detect and avoid system, preferably said cooperative detect and avoid system providing at least said geometric information descriptive of the second device (3).

**Fig. 1**

**Fig. 2**

**Fig. 3**

Europäisches
Patentamt

European
Patent Office

Office européen
des brevets

# EUROPEAN SEARCH REPORT

Application Number

EP 19 19 9793

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 646 502 B1 (GENTRY NICHOLAS KRISTOFER [US]) 9 May 2017 (2017-05-09) * columns 2-11, 14, 15; figures 1-7 * | 1-15 | INV. G08G5/00 |
| X | US 2017/069214 A1 (DUPRAY DENNIS J [US] ET AL) 9 March 2017 (2017-03-09) * paragraphs 111-121, 125, 126, 135-137, 170-178, 190-223, 232-255, 262-275, 287, 327-357, 372, 389-398; claims 1-5,24-38; figures 1-15 * * paragraph [0345] * | 1-15 | |
| A | US 2019/051191 A1 (MOSHER AARON Y [US] ET AL) 14 February 2019 (2019-02-14) * the whole document * | 1-15 | |
| A | US 2019/035285 A1 (PRIEST LEE [US]) 31 January 2019 (2019-01-31) * the whole document * | 1-15 | |
| A | EP 3 422 038 A1 (DEUTSCHE TELEKOM AG [DE]) 2 January 2019 (2019-01-02) * the whole document * | 1-15 | TECHNICAL FIELDS SEARCHED (IPC) G01S G05D G08G |
| A | US 2017/131717 A1 (KUGELMASS BRET [US]) 11 May 2017 (2017-05-11) * the whole document * | 1-15 | |

The present search report has been drawn up for all claims

| Place of search | Date of completion of the search | Examiner |
|---|---|---|
| The Hague | 9 March 2020 | Datondji, Sokèmi |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 3 799 008 A1**

## ANNEX TO THE EUROPEAN SEARCH REPORT
## ON EUROPEAN PATENT APPLICATION NO.

EP 19 19 9793

09-03-2020

| Patent document cited in search report | | Publication date | Patent family member(s) | | Publication date |
|---|---|---|---|---|---|
| US 9646502 | B1 | 09-05-2017 | US | 9646502 B1 | 09-05-2017 |
| | | | US | 9858822 B1 | 02-01-2018 |
| US 2017069214 | A1 | 09-03-2017 | NONE | | |
| US 2019051191 | A1 | 14-02-2019 | AU | 2018214066 A1 | 28-02-2019 |
| | | | CA | 3002083 A1 | 11-02-2019 |
| | | | CN | 109387828 A | 26-02-2019 |
| | | | EP | 3444748 A2 | 20-02-2019 |
| | | | JP | 2019061659 A | 18-04-2019 |
| | | | US | 2019051191 A1 | 14-02-2019 |
| US 2019035285 | A1 | 31-01-2019 | NONE | | |
| EP 3422038 | A1 | 02-01-2019 | NONE | | |
| US 2017131717 | A1 | 11-05-2017 | US | 2014316616 A1 | 23-10-2014 |
| | | | US | 2016009390 A1 | 14-01-2016 |
| | | | US | 2016046373 A1 | 18-02-2016 |
| | | | US | 2016046374 A1 | 18-02-2016 |
| | | | US | 2017131717 A1 | 11-05-2017 |
| | | | US | 2018084316 A1 | 22-03-2018 |